# EUROPEAN PATENT SPECIFICATION

(11) **EP 3 348 827 B1**
(45) Date of publication and mention of the grant of the patent: **06.11.2019**
(21) Application number: 17200710.6
(22) Date of filing: 09.11.2017
(51) Int. Cl.: F03D 17/00, F03D 80/50, G01N 21/954

(54) **INTERIOR INSPECTION OF A WIND TURBINE BLADE**
INNENINSPEKTION EINER WINDTURBINENSCHAUFEL
INSPECTION INTÉRIEURE D'UNE AUBE D'ÉOLIENNE

(30) Priority: 16.01.2017 DE 102017200585
(43) Date of publication of application: 18.07.2018
(73) Proprietor: Siemens Gamesa Renewable Energy A/S, 7330 Brande (DK)
(72) Inventor: Nielsen, Per, 9310 Vodskov (DK)
(74) Representative: Aspacher, Karl-Georg

(56) References cited:
- WO-A1-2012/097475
- WO-A1-2016/101953
- DE-A1-102009 022 179
- US-A1- 2013 093 879

## Description

### Field of invention

The present invention relates to wind turbine blades, in particular to hollow wind turbine blades.

### Art Background

It known in the technical field of wind turbine to inspect the interior of hollow wind turbine blades is normally done manually. In particular, the visual inspection of the inside of the blades may be performed by taking photos of the interior of the blade through the manual use of a camera performed by an operator.
Such type of inspection normally requires the blade to be in a horizontal plane. The inspection is preferably done before installation, because after the installation a manual inspection would be more complicated and more expensive. Examples of inspection devices and methods are available in documents WO2016101953, WO2012/097475 and DE102009022179.

### Summary of the Invention

It may be an objective of the present invention to provide for an easier and less expensive inspection of the interior hollow wind turbine blades.
It may be another objective of the present invention to allow for inspection of hollow wind turbine blades after installation, in a safer manner.
It may be another objective of the present invention to allow for inspection of a hollow wind turbine blade when the blade is in any position, e.g. any position in the rotor plane.

These objectives are solved by a blade for a wind turbine and a method of inspecting a wind turbine blade according to the independent claims. The dependent claims describe advantageous developments and modifications of the invention.

According to a first aspect of the present invention, a wind turbine blade includes
- an inner surface,
- at least a travelling path defined on the inner surface,
- the at least a travelling path (being coupleable with at least a measuring device in such a way that measuring device is movable along travelling path for inspecting the blade, the inspection device including at least a sensor for inspecting the blade.

According to a second aspect of the present invention, a method for inspecting the inside of a wind turbine blade includes the steps of:
- providing at least a travelling path on an inner surface of the blade,
- coupling the travelling path with at least a measuring device, including at least a sensor for inspecting the blade,
- moving the measuring device along the travelling path,
- inspecting the inside of the blade by using the sensor.

According to possible embodiments of the present invention, the travelling path on the inner surface of the blade may be defined by a rail, along which the measuring device travels. The measuring device may be a vehicle moving along the rail. Particularly the rail may be provided on the inner surface of the blade through pre-casting together with the blade or mounting of a previously manufactured rail on the inner surface of the blade.

Advantageously, the measuring device travelling along the travelling path can be used to inspect the inside of the blade. Also damages on the outer surface of the blade, e.g. caused by erosion, are also detectable through the inside inspection, using the prober inspection device, due to increased light transmission through the damaged area.

Further advantageously the present invention allows access to areas of the blade where a person would not fit and thus leave areas with no possibility of inspection.

According to possible embodiments of the present invention, the sensor is movably mounted on the measuring device. In particular, the sensor may rotatable mounted on the inspection device. Advantageously this facilitates the monitoring of the inside of the blade.

According to possible embodiments of the present invention, the at least one sensor includes a camera and/or an infrared sensor and/or a laser-based sensor. Advantageously this provides the possibility to perform a plurality of different type of measurement inside the blade.

According to a possible embodiment of the present invention, the measuring device is an automated vehicle. Particularly, the automated vehicle may be equipped with an electrical motor and, optionally, with a battery charger docking station. Advantageously, this allows the inspection to be performed remotely, from a remote computer.

Embodiments of the invention have been described with reference to different subject matters. In particular, some embodiments have been described with reference to apparatus (lifting device) type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawing

The aspects defined above and further aspects of the present invention are apparent from the examples of embodiment to be described hereinafter and are explained with reference to the examples of embodiment. The invention will be described in more detail hereinafter with reference to examples of embodiment, but to which the invention is not limited.
Fig. 1 shows a schematic sectional view of hollow wind turbine blade according to the present invention,
Fig. 2 shows a schematic axonometric view of a detail of the hollow wind turbine blade of Fig. 1,
Fig. 3 shows a sectional view of the hollow wind turbine blade of Fig. 1, according to the sectional line III-III of Fig. 1.

### Detailed Description

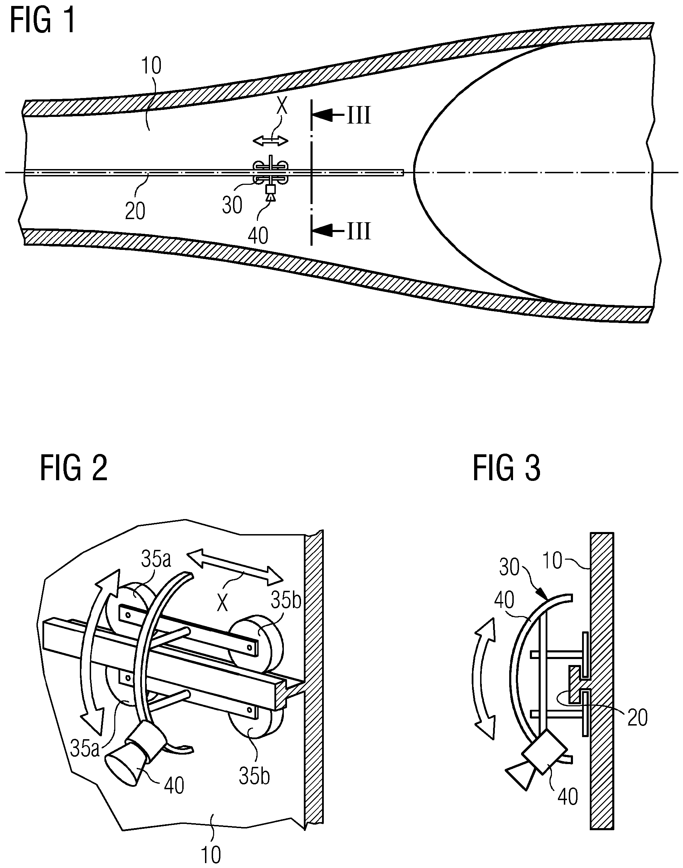

**Figs. 1** to **3** show the inside of a wind turbine blade 1 (partially represented) including an inner surface 10, on which a travelling path X is defined.
According to a possible embodiment of the present invention, two travelling path X may be provided on two opposite sides of the inner surface 10 of the wind turbine blade 1 (the second travelling path X is not visible in the sectioned blade 1 of **Fig. 1**).
Each travelling path X may be straight or curved.
Each travelling path X is coupleable with at least a measuring device 30, in such a way that measuring device 30 is movable along travelling path X for inspecting the blade 1.
The travelling path X is defined by a rail 20. The rail 20 may have an I-section or T-section design and may be attached to the shear web (having a I-beam or box beam design, not represented in the attached figures) provided at the centre of the blade 1 as structural element.

According to possible embodiments of the invention, the rail(s) 20 and/or the vehicle 30 are designed to allow the vehicle to be coupled to the rail independent from the orientation of the blade. Such design would allow for easy use even after mounting the blade to the hub and without the need to necessarily bring the blade to a horizontal position.
Two rails 20 may be provided on two opposite sides of the inner surface 10 of the wind turbine blade 1 (the second rail 20 is not visible in the sectioned blade 1 of **Fig. 1**).

According to a possible embodiment of the invention, the rail 20 may be pre-casted before installation of the blade 1 and arranged as to be an integrated part of the casting of the blade 10 due to the limit access and space in the final blade 1. The rail 20 is preferably, but not exclusively, made of non-conductive material.

According to another possible embodiment of the invention, the rail 20 may be manufactured separately from the blade 1 and subsequently mounted on the surface 10 using of non-conductive material (e.g. glued or fastened using a plastic or a composite material such as a material based on glass fibre) .

The choice of one of the above described embodiments depends on the desired length of the rail and on the length and available space in the blade. If the rail is pre-casted before installation, if may be segmented using several elements of individual length.

According to another possible embodiment of the invention (not shown), the travelling path X is of the magnetic type, magnetically coupleable with a magnetic measuring device.

In the embodiments of the attached **Figs. 1** to **3****,** the measuring device 30 is a vehicle having two couples of wheels 35a, 35b, each couple including a front wheel 35a and a rear wheel 35b. Each couple of wheels 35a, 35b is coupable on a respective side of the rail 20, in order to allow the vehicle 30 to move along the rail 20.
The vehicle 30 may be permanently mounted on the rail 20 or coupled to it only when necessary for inspection. The vehicle 30 could be moved either manually by a simple string system (not represented) or it may be an automated vehicle, e.g. equipped with an electrical motor. Optionally such an automated vehicle 30 may equipped with a battery charger docking station provide in the root end of the blade 1.
Depending on the length of the rail(s) 20, two or more vehicles 30 may be used, for example one for each of the two rails 20 or, as an alternative, one vehicle 30 only is used, but designed to be easily moved from one rail to another.

According to possible embodiments of the invention, the rail(s) 20 may comprise markers so that the position of the vehicle is known though-out the travelling path X. A similar position detecting device may be part of the vehicle 30 itself.
The inspection device 30 includes one or more sensors 40 for inspecting the blade 1. The sensor(s) 40 may include a camera and/or an infrared sensor and/or a laser-based sensor.
The sensor(s) 40 may be programmed to inspect (photograph or scan) the inside visible surface area of the blade and optionally also of the web itself.

In the embodiment of the **Figs. 1** to **3****,** the sensor 40 is movable on a rack 45 provide on the vehicle 30 so as to be able to rotate around an axis parallel to the travelling path X. This allows moving the sensor around the rail 20, i.e. designed to cover at least 180° around the rail 20, in order to inspect the entire interior visible area of the blade 1, within the range of the vehicle 20.

The inspection procedure may be repeated over time. When an image sensor is used, e.g. a camera, the new inspection information (e.g. images) may be advantageously subtracted from the inspection information obtained in a previous inspection. This makes it possible to have an automated recognition of blade alterations (i.e. defects) in the processing of the inspection information.
A pre-scan for each blade may be done after production, in order to form the basis for subsequent inspections, e.g. after mounting.

## Claims

1. An assembly including a wind turbine blade (1) including:
- an inner surface (10),
- at least one travelling path (X) defined by at least a rail (20) on the inner surface (10),
the assembly being **characterised in that** it comprises:
- at least a vehicle (30) removably coupled with the at least one rail (20), the vehicle (30) having two couples of wheels (35a, 35b) each couple including a front wheel (35a) and a rear wheel (35b), each couple of wheels (35a, 35b) being coupled on a respective side of the rail (20), in order to allow the vehicle (30) to move along the rail (20) for inspecting the blade (1), the vehicle(30) including at least a sensor (40) for inspecting the blade (1).

2. The assembly according to claim 1, wherein the sensor (40) is movably mounted on the vehicle (30).

3. The assembly according to claim 2, wherein the sensor (40) is rotatable mounted on the vehicle (30).

4. The assembly according to claim 3, wherein the sensor (40) is rotatable around an axis parallel to the travelling path (X).

5. The assembly according to any of the preceding claims, wherein the at least a sensor (40) includes a camera and/or an infrared sensor and/or a laser-based sensor.

6. The wind turbine blade (1) according to any of the claims 1 to 5, wherein the vehicle (30) is an automated vehicle.

7. A method for inspecting the inside of a wind turbine blade (1) including the steps of:
- providing at least a travelling path (X) defined by at least a rail (20) on an inner surface (10) of the blade (1), the method being **characterised in that** it further comprises the steps of:
- coupling the travelling path (X) with at least a vehicle (30), the vehicle (30) having two couples of wheels (35a, 35b) each couple including a front wheel (35a) and a rear wheel (35b), each couple of wheels (35a, 35b) being coupled on a respective side of the rail (20), in order to allow the vehicle (30) to move along the rail (20), the vehicle (30) including at least a sensor (40) for inspecting the blade (1)
- moving the vehicle (30) along the rail (20),
- inspecting the inside of the blade (1) by using the sensor (40) .

8. The method according to claim 7, wherein the step of providing at least a travelling path (X) on an inner surface (10) of the blade includes pre-casting or mounting a rail (20) on the inner surface (10) of the blade (1).

## Patentansprüche

1. Anordnung umfassend eine Windturbinenschaufel (1), die Folgendes umfasst:
- eine Innenfläche (10),
- mindestens eine Bewegungsbahn (X), die durch mindestens eine Schiene (20) auf der Innenfläche (10) definiert ist, wobei die Anordnung **dadurch gekennzeichnet ist, dass** sie Folgendes umfasst:
- mindestens ein Fahrzeug (30), das lösbar mit der mindestens einen Schiene (20) gekoppelt ist, wobei das Fahrzeug (30) zwei Paare von Rädern (35a, 35b) aufweist, wobei jedes Paar ein Vorderrad (35a) und ein Hinterrad (35b) umfasst, wobei jedes Paar von Rädern (35a, 35b) auf einer entsprechenden Seite der Schiene (20) gekoppelt ist, um eine Bewegung des Fahrzeugs (30) entlang der Schiene (20) zum Inspizieren der Schaufel (1) zu ermöglichen, wobei das Fahrzeug (30) mindestens einen Sensor (40) zum Inspizieren der Schaufel (1) umfasst.

2. Anordnung nach Anspruch 1, wobei der Sensor (40) ist beweglich an dem Fahrzeug (30) angebracht ist.

3. Anordnung nach Anspruch 2, wobei der Sensor (40) drehbar an dem Fahrzeug (30) angebracht ist.

4. Anordnung nach Anspruch 3, wobei der Sensor (40) um eine Achse parallel zur Bewegungsbahn (X) drehbar ist.

5. Anordnung nach einem der vorhergehenden Ansprüche, wobei der mindestens eine Sensor (40) eine Kamera und/oder einen Infrarot-Sensor und/oder einen laserbasierten Sensor umfasst.

6. Windturbinenschaufel (1) nach einem der Ansprüche 1 bis 5, wobei das Fahrzeug (30) ein automatisiertes Fahrzeug ist.

7. Verfahren zum Inspizieren des Inneren einer Windturbinenschaufel (1), umfassend die folgenden Schritte:
- Bereitstellen mindestens einer Bewegungsbahn (X), die durch mindestens eine Schiene (20) auf einer Innenfläche (10) der Schaufel (1) definiert ist, wobei das Verfahren **dadurch gekennzeichnet ist, dass** es ferner die folgenden Schritte umfasst:
- Koppeln der Bewegungsbahn (X) mit mindestens einem Fahrzeug (30), wobei das Fahrzeug (30) zwei Paare von Rädern (35a, 35b) aufweist, wobei jedes Paar ein Vorderrad (35a) und ein Hinterrad (35b) umfasst, wobei jedes Paar von Rädern (35a, 35b) auf einer entsprechenden Seite der Schiene (20) gekoppelt ist, um eine Bewegung des Fahrzeugs (30) entlang der Schiene (20) zu ermöglichen, wobei das Fahrzeug (30) mindestens einen Sensor (40) zum Inspizieren der Schaufel (1) umfasst,
- Bewegen des Fahrzeugs (30) entlang der Schiene (20),
- Inspizieren des Inneren der Schaufel (1) unter Verwendung des Sensors (40).

8. Verfahren nach Anspruch 7, wobei der Schritt des Bereitstellens mindestens einer Bewegungsbahn (X) auf einer Innenfläche (10) der Schaufel das Vorfertigen oder Anbringen einer Schiene (20) auf der Innenfläche (10) der Schaufel (1) umfasst.

## Revendications

1. Ensemble comprenant une pale d'éolienne (1) comprenant :
- une surface interne (10),
- au moins un chemin de déplacement (X) défini par au moins un rail (20) sur la surface interne (10), l'ensemble étant **caractérisé en ce qu'**il comprend :
- au moins un véhicule (30) couplé de manière amovible à l'au moins un rail (20), le véhicule (30) ayant deux couples de roues (35a, 35b), chaque couple comprenant une roue avant (35a) et une roue arrière (35b), chaque couple de roues (35a, 35b) étant couplé à un côté respectif du rail (20), afin de permettre au véhicule (30) de se déplacer le long du rail (20) pour inspecter la pale (1), le véhicule (30) comprenant au moins un capteur (40) pour inspecter la pale (1).

2. Ensemble selon la revendication 1, dans lequel le capteur (40) est monté de manière amovible sur le véhicule (30).

3. Ensemble selon la revendication 2, dans lequel le capteur (40) est monté de manière rotative sur le véhicule (30).

4. Ensemble selon la revendication 3, dans lequel le capteur (40) peut effectuer une rotation autour d'un axe parallèle au chemin de déplacement (X).

5. Ensemble selon l'une quelconque des revendications précédentes, dans lequel l'au moins un capteur (40) comprend une caméra et/ou un capteur infrarouge et/ou un capteur à laser.

6. Pale d'éolienne (1) selon l'une quelconque des revendications 1 à 5, dans laquelle le véhicule (30) est un véhicule automatisé.

7. Procédé d'inspection de l'intérieur d'une pale d'éolienne (1) comprenant les étapes :
- prévoir au moins un chemin de déplacement (X) défini par au moins un rail (20) sur une surface interne (10) de la pale (1), le procédé étant **caractérisé en ce qu'**il comprend en outre les étapes :
- coupler le chemin de déplacement (X) à au moins un véhicule (30), le véhicule (30) ayant deux couples de roues (35a, 35b), chaque couple comprenant une roue avant (35a) et une roue arrière (35b), chaque couple de roues (35a, 35b) étant couplé à un côté respectif du rail (20), afin de permettre au véhicule (30) de se déplacer le long du rail (20), le véhicule (30) comprenant au moins un capteur (40) pour inspecter la pale (1),
- déplacer le véhicule (30) le long du rail (20),
- inspecter l'intérieur de la pale (1) à l'aide du capteur (40).

8. Procédé selon la revendication 7, dans lequel l'étape consistant à prévoir au moins un chemin de déplacement (X) sur une surface interne (10) de la pale comprend le pré-moulage ou le montage d'un rail (20) sur la surface interne (10) de la pale (1).
